(19) Europäisches Patentamt

European Patent Office

Office européen des brevets

(11)  EP 3 125 644 B1

(12)  **EUROPEAN PATENT SPECIFICATION**

(45) Date of publication and mention
of the grant of the patent:
**04.03.2020  Bulletin 2020/10**

(51) Int Cl.:
*H05B 1/02* (2006.01)          *A47J 37/12* (2006.01)
*G05D 23/19* (2006.01)

(21) Application number: **15178651.4**

(22) Date of filing: **28.07.2015**

(54) **METHOD AND COMPUTER PROGRAM FOR CONTROLLING A FRYER, AND FRYER ARRANGED FOR CARRYING OUT SUCH METHOD**

VERFAHREN UND COMPUTERPROGRAMM ZUR STEUERUNG EINES FRITTIERGERÄTS UND FRITTIERGERÄT ZUR DURCHFÜHRUNG DES VERFAHRENS

PROCÉDÉ ET PROGRAMME INFORMATIQUE PERMETTANT DE COMMANDER UNE FRITEUSE ET FRITEUSE CONÇUE POUR METTRE EN OEUVRE UN TEL PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.02.2017  Bulletin 2017/05**

(73) Proprietor: **ELECTROLUX PROFESSIONAL S.p.A.**
**33170 Pordenone (IT)**

(72) Inventors:
• **TOPPANO, Michele**
  **33080 Porcia (PN) (IT)**
• **TASSAN MANGINA, Franco**
  **33080 Porcia (PN) (IT)**

(74) Representative: **AWA Sweden AB**
**P.O. Box 45086**
**104 30 Stockholm (SE)**

(56) References cited:
**EP-A2- 2 048 566      US-A- 4 672 540**
**US-A- 5 186 097      US-A1- 2006 257 536**

EP 3 125 644 B1

**Description**

**Field of the invention**

The present invention relates to a fryer and to a method for controlling it. Such fryer and relative method are particularly suited for deep-frying foods for professional use, namely in the kitchens of restaurants, hotels, fast-foods, kiosks, stalls, hospitals, cookhouses, canteens or refectories.

**Background art**

Modern deep fat fryers are commonly used in professional kitchens (e.g. in fast food restaurants) for performing deep fat frying of food, i.e. a cooking method wherein food is submerged in relatively large quantities of edible cooking oils at high temperature (e.g. 180° C. or higher).
An important requirement of a fryer for professional use is the capability of cooking food with a constant and optimal doneness over a great number of cooking runs, in particular providing a cooked food having always the best possible taste. Several methods for controlling the frying process have been developed over the time to this purpose.
Effective examples of such methods and respective fryers are disclosed in the publications US5938961 and US5827556, based on estimating the overall amount of heat energy that the food is supplied with by a frying medium such as oil or other liquid fats. In these known fryers, a user determines the ideal cooking parameters, mainly the ideal cooking time and the ideal cooking temperature, through trial and error frying small quantities of food. Once these parameters have been determined, their values are input in the logic unit of the fryer through a key panel. Alternatively the key panel allows setting in the logic unit values of the ideal cooking time and the ideal cooking temperature derived by recipies or by the producer of the raw food to be fried.
Nevertheless this way of setting the optimal cooking parameters is quite laborious and not very handy in a professional kitchen, stall or in the back of a fast-food, since it requires noting apart the values of the parameters found during the frying trials and thereafter inputting them manually through the key panel. The user can do mistakes in reading, copying or inputting the values of the optimum parameters, which is also cumbersome and time consuming. Furthermore the personnel supposed to use the fryer is not familiar with such a planned and structured way of operating. Another prior art fryer is disclosed in US5186097.

**Summary of the invention**

An object of the present invention is providing a fryer and a method for controlling it, which overcomes the drawbacks of the known fryers and provides a fryer which is easier to be used especially for determining and setting the optimal cooking parameters in order to provide a well done and tasty food maintaining a constant quality over many cooking cycles.
In a first aspect, this object is achieved through a method for controlling a fryer comprising a vat, a logic unit and a manual validation interface, the method comprising the following steps:

S.1) carrying out a learning frying run comprising the following steps:

S.1.1) placing a first batch of food to be fried in a cooking medium contained in the vat, the food to be fried being of a predetermined kind;
S.1.2) when the food to be fried reaches a desired frying condition, communicating to the logic unit through the manual validation interface that the food has reached said desired frying condition;

S.2) carrying out a successive frying run comprising the following steps:

S.2.1) placing a second batch of food to be fried in the cooking medium contained in the vat, the food of the second batch being substantially of the same kind as of the food of the first batch;
S.2.2) frying the second batch of food for a frying time determined by the logic unit depending on the desired frying condition signalled through the manual validation interface during the learning frying run.

In a second aspect, the present invention is directed to a fryer programmed or however arranged for carrying out a method according to the first aspect of the invention and comprising a vat, a logic unit and a manual validation interface.,
[0008]    In a third aspect, the present invention is directed to a computer program arranged for enabling a fryer to carry out the method according to the first aspect of the invention when loaded on the logic unit of the fryer.

In an advantageous embodiment of the method according to the invention, the manual validation interface comprises one or more of the following entities: a press-button, a switch, a lever, a rotatable knob, a touch-screen, a keyboard, a joystick.

In an advantageous embodiment of the method according to the invention, the manual validation interface is suitable for communicating to the logic unit only whether the desired frying condition has been reached or not through a binary communication channel. These kinds of manual interface allow a user to communicate quickly, easily and in real time the achievement of the desired degree of doneness and a satisfying quality of the cooked product.

In an advantageous embodiment of the method according to the invention, in step S.2.2) the logic unit determines the frying time depending on the thermal energy supplied to the first batch of food by the frying medium during the learning frying run. This measure allows the logic unit to determine the end of a frying run regardless of the amount of food to be fried in the same batch, and allows teaching or training the fryer to cook a small amount of food, and then easily and reliably generalising the results of the training run to any other amount of food in the batches of the successive and validated frying runs.

In a particular embodiment of the method according to the invention, the logic unit records the evolution over the time of the temperature of the cooking medium during the learning frying run, at least until the manual validation interface is activated. This allows storing in a simpler and easier way the results of test frying runs in a memory for use in later validated frying runs. Furthermore this measure reduces the occurrence of mistakes in communicating the test results to the logic unit of the fryer.

In an advantageous embodiment of the method according to the invention, the logic unit records the evolution over the time of the temperature of the cooking medium during the learning frying run, at least until the manual validation interface communicates to the logic unit that the learning frying run is completed.

In an advantageous embodiment of the method according to the invention, in step S.2.2) the logic unit determines the thermal energy supplied to the first batch of food by the frying medium during the learning frying run depending on the difference between the temperature of the frying medium and the temperature of the food to be fried during the learning frying run. This measure too, as well as the next ones, contributes to extrapolate the results of the training run to different amounts of food in the batches of the successive and validated frying runs.

In an advantageous embodiment of the method according to the invention, in step S.2.2) the logic unit determines the thermal energy $E\_sp$ supplied to the first batch of food by the frying medium during the learning frying run depending on the integral over the time of the difference between the temperature of the frying medium and the internal temperature of the food to be fried during the learning frying run.

In an advantageous embodiment of the method according to the invention, the fryer is provided with a temperature sensor arranged for detecting the temperature of the frying medium in the vat when the food is being fried, and the logic unit is programmed or however arranged for determining the thermal energy $E\_sp$ supplied to the first or the second batch of food by the frying medium on the basis of the detections of the temperature sensor.

In an advantageous embodiment of the method according to the invention, in step S.2.2) the fryer stops frying the second batch of food or emits an alarm or signal when the frying medium has supplied the food of the second batch with substantially the same amount of overall thermal energy or of the same amount of thermal energy per unity of mass of food $E\_sp$ as the amount of thermal energy the first batch of food has been supplied with by the frying medium during the learning frying run.

The advantages achievable through the present invention will be more apparent, to the person skilled in the field, from the following detailed description of an example of a particular non limiting embodiment, provided with reference to the following schematic figures.

**List of Figures**

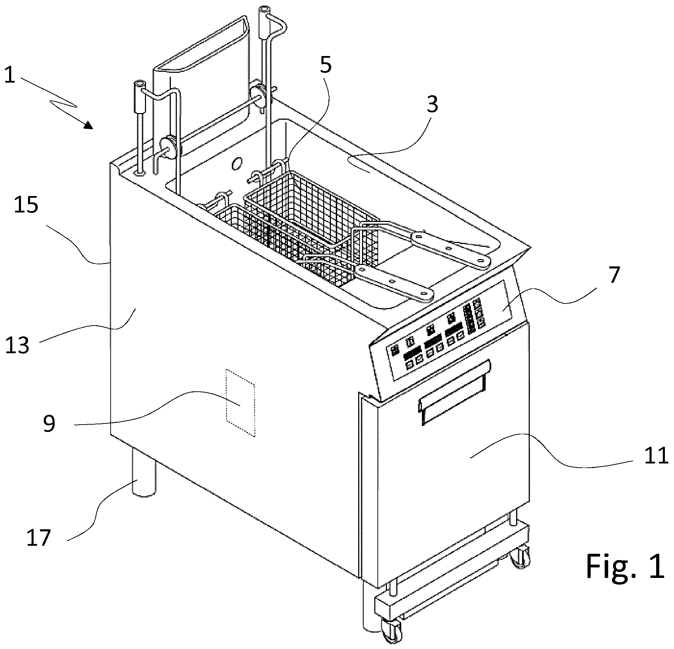

Figure 1 shows a perspective view of a fryer according to a particular embodiment of the present invention;
Figure 2 shows a front view of the control panel of the fryer of Figure 1;

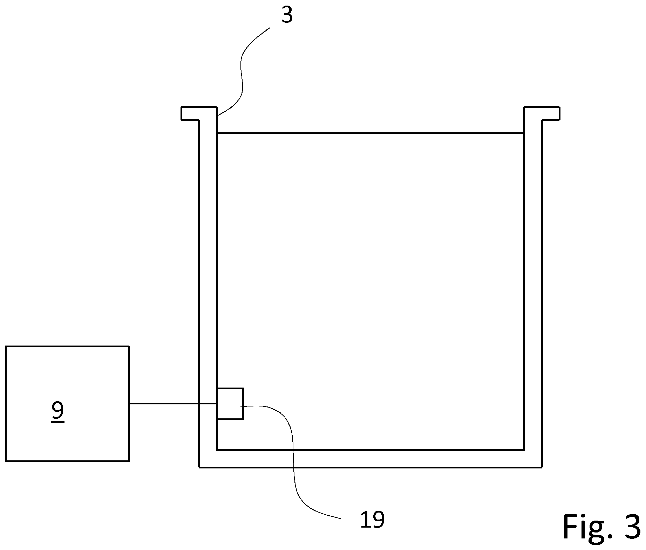

Figure 3 shows a schematic cross-section of the vat and a partial functional scheme of the fryer of Figure 1;
Figure 4 shows a graph of the temperatures of the cooking medium and of the food to be fried during a learning frying run of the fryer of Figure 1;
Figure 5 shows a graph of the temperatures of the cooking medium and of the food to be fried during a successive frying run of the fryer of Figure 1.

**Detailed description**

In attached Figures a deep fat fryer according to an advantageous embodiment of the present invention is referred to with the overall reference 1; the deep fat fryer 1 comprises a frying vat 3 arranged for containing oil, liquid lard, other liquid fats or yet further cooking media and one or more baskets 5, usually made of metal grid.

The fryer 1 further comprises one or more suitable heating elements for heating the cooking medium, such as electric heaters, gas burners or infra-red heaters (not shown), a control panel 7 preferably arranged on the front side of the fryer, and a logic unit 9. The control panel 7 comprises a manual validation interface through which the user, as explained in further details later on, can inform the logic unit 9 that an optimum frying result has been achieved.

The manual validation interface can comprise one or more of the following entities: a press-button 70, 72, a switch, a lever, a rotatable knob, a touch-screen, a keyboard, a joystick. The press-buttons, levers or rotatable knobs can be mechanical or virtual, and in the latter case simulated through a touch-screen.

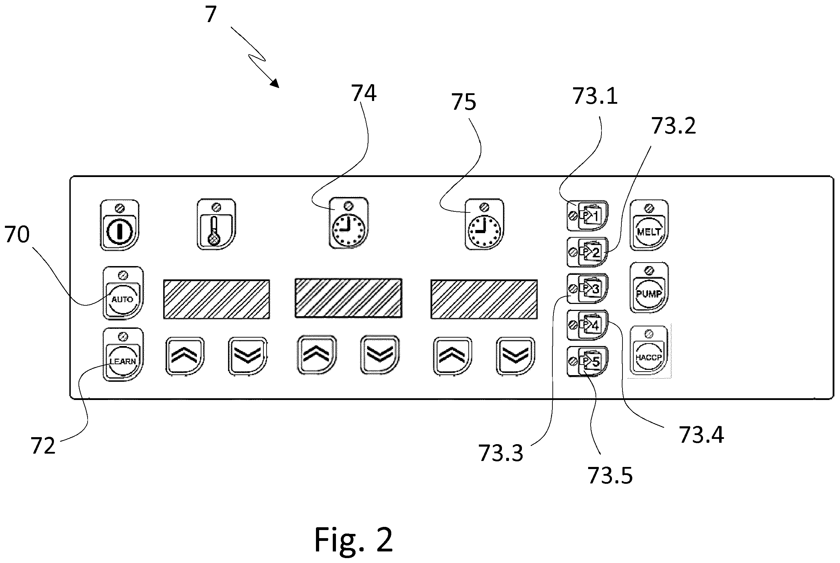

As in the embodiment of Figure 2, the manual validation interface can advantageously comprise a first 70 and a second press-button 72. The first button 70 can advantageously switch the fryer 1 between two operation modes; a learning mode and a validated mode. The learning- or training frying runs are carried out in the learning mode, while the regular and everyday production for satisfying the clients is carried out in the validated mode.

The press button 72 advantageously communicates the start and the completion of the learning frying run to the logic unit 9, for example by simply triggering the start and the stop of the recording of the frying parameters during the test frying run. In this respect, the press button 72 has the function of a validation button or validation key. However the press-button 70 too can advantageously work as a validation button, for example in case the logic unit 9 is programmed or arranged for stopping the recording of the frying parameters and terminating the learning frying run when the button 70 is pressed causing the fryer 1 to pass from the learning- to the validated operating mode.

Anyway the logic unit 9 can advantageously be programmed in such a way that other possible combinations of press buttons or anyway manual validation interfaces can be used for switch the fryer 1 between the learning mode and the validated mode, and for communicating the start and the completion of the learning frying run to the logic unit 9; for example, in another advantageous embodiment, a press-button 70 can switch the fryer 1 between the learning mode and the validated mode if kept pressed for a predetermined amount of time (e.g. 3 seconds), and then, once the learning mode is activated, the same press-button 70 can be used for triggering the start and the stop of the recording of the frying parameters during the test frying run.

Preferably the fryer 1 further comprises suitable front, side and back panels 11, 13, 15 for concealing the heating elements, the logic unit 9 and the other elements of the fryer, and a structural frame 17 for supporting the panels 11, 13, 15, the vat 3 and the other elements of the fryer.

According to an aspect of the invention, the fryer 1 is arranged for allowing the following method be carried out:

S.1) carrying out a learning frying run, comprising the following steps:

S.1.1) placing a first batch of food to be fried in the cooking medium contained in the vat 3, the food to be fried being of a predetermined kind;
S.1.2) when the food to be fried reaches a desired frying condition, communicating to the logic unit 9 through the manual validation interface 70, 72 that the food has reached said desired frying condition;

S.2) carrying out a successive frying run comprising the following steps:

S.2.1) placing a second batch of food to be fried in the cooking medium contained in the vat 3, the food of the second batch being substantially of the same kind as of the food of the first batch;
S.2.2) frying the second batch of food for a frying time determined by the logic unit 9 depending on the desired frying condition signalled through the manual validation interface 70, 72 during the learning frying run.

The kind of the food to be fried is distinguished by qualitative features which substantially influence the results of the frying. For example potatoes, carrots, chopped meat, French fries having a size 9 X 9 and French fries of size 6 X 6 are all different kinds of food to be fried. In general, different taxonomical species or breed of a vegetable or an animal, or different dimensions or shape -for instance sticks or slices- of the pieces to be fried can require different frying times and temperatures, and can differentiate the kind of the food to be fried.

Advantageously, during the learning frying run the logic unit 9 determines the frying time depending on the thermal energy supplied to the first batch of food by the frying medium during the learning frying run itself. The logic unit 9 can consider the overall thermal energy supplied to the food to be fried, or the thermal energy per unit of mass of the food to be supplied with.

Considering that the food to be fried is substantially fragmentary, such as a batch of French fries or meat nuggets, and that its every piece of food is completely immersed in oil or other cooking medium at the same temperature over the whole vat 3, it can be assumed that the main parameters influencing the degree of doneness and the achievement of an ideal cooking are only the duration of the frying and by the thermal energy that a single piece of food receives from the cooking medium, while the number of pieces of food fried in the same batch can be disregarded. Such thermal energy per piece of food, conventionally referred to as "real cooking energy E_sp" in the present description is proportional to the difference between the temperature of the cooking medium T_oil and the surface temperature of the pieces of food T_sfood integrated or however summed throughout the whole frying time.

Consequently, the following relation holds

$$[\text{F.1}] \qquad \text{E\_sp} = K*S*\int (T_{oil} - T\_sfood)\mathrm{dt}$$

Wherein S is the surface of a single piece of food, and K is a global transfer coefficient.

Indicating as "ideal energy E_opt" the optimum energy necessary for frying a single piece of food as desired by a cook or by an end customer, a batch of food is properly fried, or fried according to the cook's or end client's desires, when the specific thermal energy is equal to the real cooking energy, provided that, in the following description, if not explicitly specified two quantities are considered equal one to another if their values differ by $\pm$ 20% or $\pm$ 10% one from another. The temperature of the cooking medium is usually much higher than 100°C, and often just a little below 180°C.

Assuming that during the whole frying process the pieces of food always contain water or humidity that vaporizes and leaves the piece of food itself, for simplifying the calculations it can be assumed that the temperature of the surface of each piece of food is always equal to 100°C, that is to the boiling temperature of water at room conditions.

Therefore the relation [F.1] can be rewritten as follows

$$[\text{F.1bis}] \qquad \text{E\_sp} = K*S*\int (T_{oil} - 100°C)\ \mathrm{dt}$$

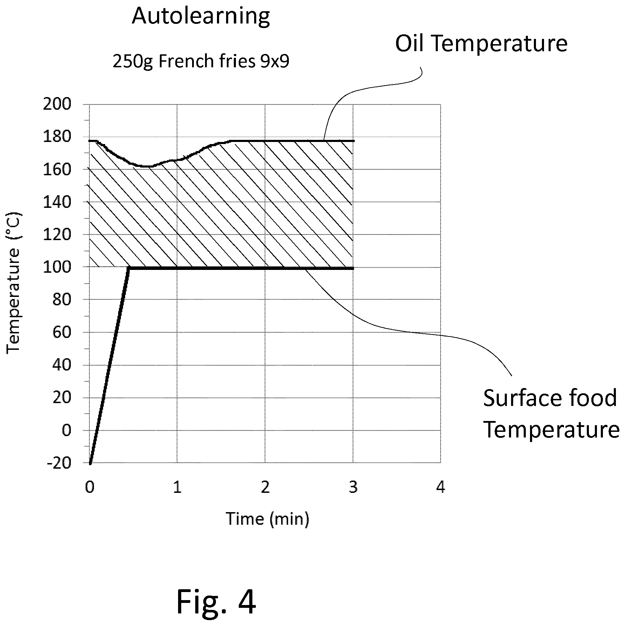

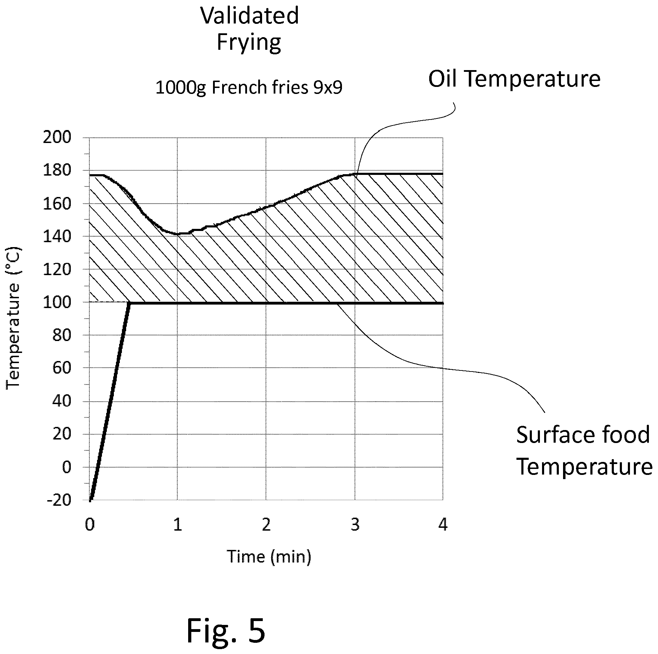

Figures 4 and 5 show graphs of the temperatures of the surface of the food pieces, and of the oil or other cooking medium, during a "training" frying run and during an approved or validated frying run respectively. The hatched areas between the two temperature lines (Oil temperature and Surface food temperature) correspond to the real cooking energies E_sp.

The relations [F.1, F.1bis] duly take into account variations of the quantity of food of different batches.

As clear from the comparison of Figures 4 and 5, the effect of placing in the vat 3 a huger batch of frozen food at an average temperature of -18°C is a stronger decrease of the temperature of the cooking medium at the start of the frying cycle; this implies that for frying one kilogram of food a longer time is necessary than for frying 250 grams of the same food, in order to supply each piece of food of both batches with the same real cooking energy E_sp, that is for frying them at the same degree of doneness.

The logic unit 9 can therefore control the frying process according to the previous considerations, automatically adapting the frying time to each batch of food.

In order to carry out the previously described control principles, the fryer is preferably provided with a temperature sensor 19 arranged for measuring the temperature of the frying medium in the vat 3 when the food is being fried. Furthermore, advantageously the logic unit 9 is suitable for recording and storing in a memory the evolution of the temperature of the cooking medium and other relevant frying parameters over the time.

The logic unit 9 is programmed or however arranged for determining the ideal energy E_opt or other thermal energy supplied to the first or the second batch of food by the frying medium on the basis of the detections of said temperature sensor 19.

Preferably the manual validation interface 70, 72 is suitable for communicating to the logic unit 9 only whether the desired frying condition has been reached or not; that is, the manual validation interface works as a binary information device, transmitting only two possible pieces of information: e.g. YES or NO, 1 or 0. Advantageously the manual validation interface 70, 72 can be activated, so as to communicate to the logic unit 9 whether the desired frying condition has been reached or not, e.g. through a single pressing, touch or rotation. A user can use such an interface very quickly and in a very simple way.

An example of the operation and use of the fryer 1 will now be described. For setting the ideal energy for frying a new kind of a predetermined food, for example French fries 9 X 9 mm, the user, for example a professional cook carries out a test run placing a small amount of fries in the vat 3, when the oil or other cooking medium is already at the correct frying temperature, for instance at 175°C.

Preferably the test amount of fries, or more generally of the food to be fried, is not smaller than a predetermined minimum threshold. Such minimum threshold is preferably not less than about 50 grams, preferably not less than about 100 grams and even more preferably not less than about 200-250 grams. Such minimum threshold can be for example not less than 400-500 grams. Adopting these threshold values the measurements of the cooking energy during the test runs are not significantly affected by the mass of the baskets heated together with the food. The user can for example press:

- the key 70, indicating to the logic unit 9 whether the frying run is A) a learning or training one or B) a validated run and the fryer 1 has to operate accordingly; and
- the key 72, causing the logic unit 9 start and stop recording the relevant parameters of the frying run, such as the evolution of the temperature of the oil or other cooking medium over the time; for instance a first pressure on the key 72 in learning mode causes the logic unit 9 to start recording the frying parameters, and a second pressure on the key 72 causes the logic unit 9 to stop recording such parameters.

From time to time the cook can draw and taste samples of French fries from the vat 3 for checking the progress of the frying, the taste and the degree of doneness. When he/she notices that the fries or other kind of food has been properly fried, he/she activates the validation interface, namely pressing the key 72, which communicates to the logical unit 9 that the correct degree of cooking has been reached.

The logic unit 9 consequently can stop recording the evolution over the time of the temperature of the cooking medium and of other relevant parameters, if any; it also records the duration of the frying run; possibly it can measure or calculate the temperature of the food during the frying run, unless such temperature has not already input by the user or is assumed to be about 100°C, as previously described.

The logic unit 9 then determines the ideal energy E_opt, preferably according to the relations [F.1] or [F.1bis], that the food received from the cooking medium during the test frying run. The learning or training phase of the fryer is now completed, and the user can store that energy value E_opt in the internal memory of the logic unit 9 by pressing one of the programmable buttons 73.1-73.5, for example the button 73.1, associated to the French fries 9 X 9 mm.

The user can carry out the learning frying run for other food typologies memorizing their energy value E_opt in the remaining programmable buttons 73-2-3-4-5.

The user can then carry out a successive and "validated" frying run for frying a new batch of food for satisfying the real need of his clients, for example by frying 1000 grams of the same French fries 9 X 9.

The user has simply to press the mode key 70, for instructing the logit unit 9 to carry out a validated run, and recall the memorized ideal energy E_opt corresponding to the French fries 9 X 9 from the internal memory of the logic unit 9 simply by pressing the button 73.1, place the 1 kg batch in the vat 3 and press the start button 74 or 75 -left or right basket- causing the logic unit 9 to start calculating the energy E_sp necessary for determining the optimal frying time.

Through the sensor 19 the logic unit 9 continuously acquires in real time the evolution of the temperature of the cooking medium over the time, and at the same time calculates and updates in real time the value of the real cooking energy E_sp over the time during this successive "validated" frying run.

When the real cooking energy E_sp is equal to the ideal energy E_opt, the logic unit either stops the frying -for example by raising the frying baskets out of the cooking medium- or emits an alarm, for example a buzz or a suitable sound.

From the previous description it is clear that the fryer 1 is able to adapt the frying time depending on the amount of food which is placed in the cooking medium; the manual validation interface 70, 72 renders the fryer extremely easy to be used, and allows training frying cycles be run very quickly and with very small risks of mistakes. In particular only one learning frying run is sufficient for determining the ideal energy for cooking a specific kind of food.

The embodiments previously described can undergo several changes and variations yet without departing from the scope of the present invention. For example the logic unit 9 can be even external to the housing formed by the panels 11, 13, 15 and the frame 17, and can be for example a remote unit communicating with the rest of the fryer 1 via the internet. The control panel 7 can be arranged in a hand-held remote control unit.

The validation press-buttons 70, 72 can be replaced for example by validation rotary knobs, virtual press-buttons shown in a touch screen, levers, switches, joystick(s).

The logic unit 9 can determine the time of completion of an optimal frying and other cooking parameters according to criteria not only based on the calculation of the ideal and real cooking energy to be supplied with but also according to different criteria and conceptual models of the frying process, for example implementing self-learning processes based on neural networks, of tracking an optimum temperature profile determined for instance through a plurality of set points. The mathematic concept of integral of a function encompasses both its exact algebraic formulation and numerical approximations thereof; in particular the concept of integral of a continuous function is interchangeable with the concept of a discrete summation.

Furthermore all details are replaceable with technically equivalent elements. For example the used materials, as well as their dimensions, can be any according to the technical needs. It is to be intended that an expression such as "A comprises B, C, D" also comprises and describes the particular case in which "A consists of B, C, D". The wording "device comprising an entity F" or "device comprising the entity F" are to be understood that the device comprises one or more entities F. The examples and lists of the possible variations of the present application are to be intended as non-exhaustive.

**Claims**

1. Method for controlling a fryer (1) comprising a vat (3), a logic unit (9) and a manual validation interface (70, 72), the method comprising the following steps: S.1) carrying out a learning frying run comprising the following steps:

   S.1.1) placing a first batch of food to be fried in a cooking medium contained in the vat (3), the food to be fried being of a predetermined kind;
   S.1.2) when the food to be fried reaches a desired frying condition, communicating to the logic unit (9) through the manual validation interface (70, 72) that the food has reached said desired frying condition;
   S.2) carrying out a successive frying run comprising the following steps:

   S.2.1) placing a second batch of food to be fried in the cooking medium contained in the vat (3), the food of the second batch being substantially of the same kind as of the food of the first batch;
   S.2.2) frying the second batch of food for a frying time determined by the logic unit (9) depending on the desired frying condition signalled through the manual validation interface (70, 72) during the learning frying run.

2. Method according to claim 1, wherein the manual validation interface comprises one or more of the following entities: a press-button (70, 72), a switch, a lever, a rotatable knob, a touch-screen, a keyboard, a joystick.

3. Method according to claim 1, wherein the manual validation interface (70, 72) is suitable for communicating to the logic unit (9) only whether the desired frying condition has been reached or not through a binary communication channel.

4. Method according to claim 1, wherein in step S.2.2) the logic unit (9) determines the frying time depending on the thermal energy supplied to the first batch of food by the frying medium during the learning frying run.

5. Method according to claim 1, wherein the logic unit (9) records the evolution over the time of the temperature of the cooking medium during the learning frying run, at least until the manual validation interface (70, 72) is activated.

6. Method according to claim 5, wherein the logic unit (9) stops recording the evolution over the time of the temperature of the cooking medium during the learning frying run when the manual validation interface (70, 72) is activated through a single pressure, a single touch or a single rotation.

7. Method according to claim 5, wherein the logic unit (9) records the evolution over the time of the temperature of the cooking medium during the learning frying run, at least until the manual validation interface (70, 72) communicates to the logic unit (9) that the learning frying run is completed.

8. Method according to claim 4, wherein in step S.2.2) the logic unit (9) determines the thermal energy supplied to the first batch of food by the frying medium during the learning frying run depending on the difference between the temperature of the frying medium and the temperature of the food to be fried during the learning frying run.

9. Method according to claim 8, wherein in step S.2.2) the logic unit (9) determines the thermal energy ($E\_sp$) supplied to the first batch of food by the frying medium during the learning frying run depending on the integral over the time of the difference between the temperature of the frying medium and the internal temperature of the food to be fried during the learning frying run.

10. Method according to claim 1, wherein the fryer is provided with a temperature sensor arranged (19) for detecting the temperature of the frying medium in the vat (3) when the food is being fried, and the logic unit (9) is programmed or however arranged for determining the thermal energy ($E\_sp$) supplied to the first or the second batch of food by the frying medium on the basis of the detections of the temperature sensor (19).

11. Method according to claim 1, wherein in step S.2.2) the fryer (1) stops frying the second batch of food or emits an alarm or signal when the frying medium has supplied the food of the second batch with substantially the same amount of overall thermal energy or of the same amount of thermal energy per unity of mass of food ($E\_sp$) as the amount of thermal energy the first batch of food has been supplied with by the frying medium during the learning frying run.

**12.** Fryer (1) programmed or however arranged for carrying out a method according to one or more of the preceding claims, and comprising a vat (3), a logic unit (9) and a manual validation interface (70, 72).

**13.** Fryer (1) according to claim 12, further comprising one or more temperature sensors arranged (19) for detecting the temperature of the frying medium in the vat (3) when the food is being fried.

**14.** Computer program arranged for enabling a fryer (1) to carry out the method according to one or more claims 1-11 when loaded on the logic unit (9) of the fryer (1).

**Patentansprüche**

**1.** Verfahren zum Steuern eines Frittiergeräts (1), umfassend eine Wanne (3), eine Logikeinheit (9) und eine manuelle Validierungsschnittstelle (70, 72), wobei das Verfahren die folgenden Schritte umfasst:

S.1) Ausführen eines Probefrittierdurchlaufs, umfassend die folgenden Schritte:

S.1.1) Platzieren einer ersten Charge von zu frittierenden Lebensmitteln in ein Garmedium, das in der Wanne (3) enthalten ist, wobei die zu frittierenden Lebensmittel von einer vorbestimmten Art sind;
S.1.2) wenn die zu frittierenden Lebensmittel einen gewünschten Frittierzustand erreichen, Kommunizieren an die Logikeinheit (9) über die manuelle Validierungsschnittstelle (70, 72), dass die Lebensmittel den gewünschten Frittierzustand erreicht haben;

S.2) Durchführen eines anschließenden Frittierdurchlaufs, umfassend die folgenden Schritte:

S.2.1) Platzieren einer zweiten Charge von zu frittierenden Lebensmitteln in das Garmedium, das in der Wanne (3) enthalten ist, wobei die Lebensmittel der zweiten Charge im Wesentlichen von derselben Art von Lebensmittel wie die der ersten Charge sind;
S.2.2) Frittieren der zweiten Charge von Lebensmitteln für eine Frittierzeit, die von der Logikeinheit (9) bestimmt wurde, in Abhängigkeit von dem gewünschten Frittierzustand, der über die manuelle Validierungsschnittstelle (70, 72) während des Probefrittierdurchlaufs signalisiert wurde.

**2.** Verfahren nach Anspruch 1, wobei die manuelle Validierungsschnittstelle eine oder mehrere der folgenden Einheiten umfasst: eine Drucktaste (70, 72), einen Schalter, einen Hebel, einen drehbaren Knopf, einen berührungsempfindlichen Bildschirm, eine Tastatur, einen Steuerknüppel.

**3.** Verfahren nach Anspruch 1, wobei die manuelle Validierungsschnittstelle (70, 72) dazu geeignet ist, der Logikeinheit (9) über einen binären Kommunikationskanal nur zu kommunizieren, ob der gewünschte Frittierzustand erreicht wurde oder nicht.

**4.** Verfahren nach Anspruch 1, wobei die Logikeinheit (9) bei Schritt S.2.2) die Frittierzeit in Abhängigkeit von der Wärmeenergie, die der ersten Charge von Lebensmitteln über das Frittiermedium während des Probefrittierdurchlaufs zugeführt wurde, bestimmt.

**5.** Verfahren nach Anspruch 1, wobei die Logikeinheit (9) die Entwicklung der Temperatur des Garmediums über die Zeit während des Probefrittierdurchlaufs aufzeichnet, zumindest bis die manuelle Validierungsschnittstelle (70, 72) aktiviert wird.

**6.** Verfahren nach Anspruch 5, wobei die Logikeinheit (9) das Aufzeichnen der Entwicklung der Temperatur des Garmediums über die Zeit während des Probefrittierdurchlaufs anhält, wenn die manuelle Validierungsschnittstelle (70, 72) durch einen einzelnen Druck, eine einzelne Berührung oder eine einzelne Drehung aktiviert wird.

**7.** Verfahren nach Anspruch 5, wobei die Logikeinheit (9) die Entwicklung der Temperatur des Garmediums über die Zeit während des Probefrittierdurchlaufs aufzeichnet, zumindest bis die manuelle Validierungsschnittstelle (70, 72) der Logikeinheit (9) kommuniziert, dass der Probefrittierdurchlauf abgeschlossen ist.

**8.** Verfahren nach Anspruch 4, wobei die Logikeinheit (9) bei Schritt S.2.2) die Wärmeenergie, die an die erste Charge von Lebensmitteln über das Frittiermedium während des Probefrittierdurchlaufs zugeführt wird, in Abhängigkeit von dem Unterschied zwischen der Temperatur des Frittiermediums und der Temperatur der zu frittierenden Lebensmittel während des Probefrittierlaufs bestimmt.

9. Verfahren nach Anspruch 8, wobei die Logikeinheit (9) bei Schritt S.2.2) die Wärmeenergie (E_sp), die an die erste Charge von Lebensmitteln über das Frittiermedium während des Probefrittierdurchlaufs zugeführt wird, in Abhängigkeit von dem Integral über die Zeit des Unterschieds zwischen der Temperatur des Frittiermediums und der Innentemperatur der zu frittierenden Lebensmittel während des Probefrittierlaufs bestimmt.

10. Verfahren nach Anspruch 1, wobei das Frittiergerät mit einem Temperatursensor (19) bereitgestellt ist, angeordnet zum Detektieren der Temperatur des Frittiermediums in der Wanne (3), wenn die Lebensmittel frittiert werden, und wobei die Logikeinheit (9) programmiert oder anderweitig angeordnet ist zum Bestimmen der Wärmeenergie (E_sp), die an die erste oder die zweite Charge von Lebensmitteln über das Frittiermedium auf der Basis der Detektionen des Temperatursensors (19) zugeführt wird.

11. Verfahren nach Anspruch 1, wobei das Frittiergerät (1) bei Schritt S.2.2) das Frittieren der zweiten Charge von Lebensmitteln anhält oder eine Warnmeldung oder ein Signal ausgibt, wenn das Frittiermedium an die Lebensmittel der zweiten Charge im Wesentlichen die gleiche Menge von Gesamtwärmeenergie oder die gleiche Menge von Wärmeenergie pro Masseneinheit der Lebensmittel (E_sp) wie die Menge von Wärmeenergie, die der ersten Charge von Lebensmitteln über das Frittiermedium während des Probefrittierdurchlaufs zugeführt wurde, zugeführt hat.

12. Frittiergerät (1), programmiert oder anderweitig angeordnet zum Durchführen eines Verfahrens nach einem oder mehreren der vorhergehenden Ansprüche und umfassend eine Wanne (3), eine Logikeinheit (9) und eine manuelle Validierungsschnittstelle (70, 72).

13. Frittiergerät (1) nach Anspruch 12, ferner umfassend einen oder mehrere Temperatursensoren (19), angeordnet zum Detektieren der Temperatur des Frittiermediums in der Wanne (3), wenn die Lebensmittel frittiert werden.

14. Computerprogramm, angeordnet zum Befähigen eines Frittiergeräts (1) zum Ausführen des Verfahrens nach einem oder mehreren der Ansprüche 1-11, wenn es in die Logikeinheit (9) des Frittiergeräts (1) geladen wird.

## Revendications

1. Procédé pour commander une friteuse (1) comprenant un bac (3), une unité logique (9) et une interface de validation manuelle (70, 72), le procédé comprenant les étapes suivantes :

   S.1) la réalisation d'une opération de friture d'apprentissage comprenant les étapes suivantes :

   S.1.1) le placement d'un premier lot d'aliment destiné à être frit dans un fluide de cuisson contenu dans le bac (3), l'aliment destiné à être frit étant d'un type prédéterminé ;
   S.1.2) lorsque l'aliment destiné à être frit atteint une condition de friture souhaitée, la communication à l'unité logique (9) par le biais de l'interface de validation manuelle (70, 72) que l'aliment a atteint ladite condition de friture souhaitée ;

   S.2) la réalisation d'une opération de friture successive comprenant les étapes suivantes :

   S.2.1) le placement d'un second lot d'aliment destiné à être frit dans le fluide de cuisson contenu dans le bac (3), l'aliment du second lot étant sensiblement du même type que celui de l'aliment du premier lot ;
   S.2.2) la friture du second lot d'aliment pendant un temps de friture déterminé par l'unité logique (9) en fonction de la condition de friture souhaitée signalée par le biais de l'interface de validation manuelle (70, 72) durant l'opération de friture d'apprentissage.

2. Procédé selon la revendication 1, dans lequel l'interface de validation manuelle comprend une ou plusieurs des entités suivantes : un bouton poussoir (70, 72), un interrupteur, un levier, un bouton rotatif, un écran tactile, un clavier, un manche à balai.

3. Procédé selon la revendication 1, dans lequel l'interface de validation manuelle (70, 72) est appropriée pour communiquer à l'unité logique (9) seulement le fait que la condition de friture souhaitée a été atteinte ou non par le biais d'un canal de communication binaire.

4. Procédé selon la revendication 1, dans lequel, dans l'étape S.2.2), l'unité logique (9) détermine le temps de friture en fonction de l'énergie thermique fournie au premier lot d'aliment par le fluide de friture durant l'opération de friture d'apprentissage.

5. Procédé selon la revendication 1, dans lequel l'unité logique (9) enregistre l'évolution, au fil du temps, de la température du fluide de cuisson durant l'opération de friture d'apprentissage, au moins jusqu'à ce que l'interface de validation manuelle (70, 72) soit activée.

6. Procédé selon la revendication 5, dans lequel l'unité logique (9) arrête d'enregistrer l'évolution, au fil du temps, de la température du fluide de cuisson durant l'opération de friture d'apprentissage lorsque l'interface de validation manuelle (70, 72) est activée par le biais d'une seule pression, d'un seul toucher ou d'une seule rotation.

7. Procédé selon la revendication 5, dans lequel l'unité logique (9) enregistre l'évolution, au fil du temps, de la température du fluide de cuisson durant l'opération de friture d'apprentissage, au moins jusqu'à ce que l'interface de validation manuelle (70, 72) communique à l'unité logique (9) que l'opération de friture d'apprentissage est achevée.

8. Procédé selon la revendication 4, dans lequel, dans l'étape S.2.2), l'unité logique (9) détermine l'énergie thermique fournie au premier lot d'aliment par le fluide de friture durant l'opération de friture d'apprentissage en fonction de la différence entre la température du fluide de friture et la température de l'aliment destiné à être frit durant l'opération de friture d'apprentissage.

9. Procédé selon la revendication 8, dans lequel, dans l'étape S.2.2), l'unité logique (9) détermine l'énergie thermique (E_sp) fournie au premier lot d'aliment par le fluide de friture durant l'opération de friture d'apprentissage en fonction de l'intégrale, au fil du temps, de la différence entre la température du fluide de friture et la température interne de l'aliment destiné à être frit durant l'opération de friture d'apprentissage.

10. Procédé selon la revendication 1, dans lequel la friteuse est pourvue d'un capteur de température (19) agencé pour détecter la température du fluide de friture dans le bac (3) lorsque l'aliment est en train d'être frit, et l'unité logique (9) est programmée, ou agencée de manière quelconque, pour déterminer l'énergie thermique (E_sp) fournie au premier ou au second lot d'aliment par le fluide de friture sur la base des détections du capteur de température (19).

11. Procédé selon la revendication 1, dans lequel, dans l'étape S.2.2), la friteuse (1) arrête de frire le second lot d'aliment ou émet une alarme ou un signal lorsque le fluide de friture a fourni à l'aliment du second lot sensiblement la même quantité d'énergie thermique totale ou la même quantité d'énergie thermique par unité de masse d'aliment (E_sp) que la quantité d'énergie thermique qui a été fournie au premier lot d'aliment par le fluide de friture durant l'opération de friture d'apprentissage.

12. Friteuse (1) programmée, ou agencée de manière quelconque, pour réaliser un procédé selon une ou plusieurs des revendications précédentes, et comprenant un bac (3), une unité logique (9) et une interface de validation manuelle (70, 72).

13. Friteuse (1) selon la revendication 12, comprenant en outre un ou plusieurs capteurs de température (19) agencés pour détecter la température du fluide de friture dans le bac (3) lorsque l'aliment est en train d'être frit.

14. Programme d'ordinateur agencé pour permettre à une friteuse (1) de réaliser le procédé selon une ou plusieurs revendications 1 à 11 lorsqu'il est chargé sur l'unité logique (9) de la friteuse (1).

Fig. 1

Fig. 2

Fig. 3

Fig. 4

Fig. 5

**EP 3 125 644 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5938961 A
- US 5827556 A
- US 5186097 A